# EUROPEAN PATENT SPECIFICATION

(11) **EP 2 481 635 B1**
(45) Date of publication and mention of the grant of the patent: **27.01.2016**
(21) Application number: 12152974.7
(22) Date of filing: 27.01.2012
(51) Int. Cl.: B60Q 1/26, F21S 8/10, F21V 5/00

(54) **Motor vehicle light**
Kraftfahrzeugleuchte
Feu de signalisation d'un véhicule

(30) Priority: 27.01.2011 IT TV20110010
(43) Date of publication of application: 01.08.2012
(73) Proprietor: Automotive Lighting Italia S.p.A., 10078 Venaria Reale (Torino) (IT)
(72) Inventor: Marcori, Franco, 33015 MOGGIO UDINESE (IT); Paroni, Sara, 33033 CODROIPO (IT); Rainis, Pietro, 33028 TOLMEZZO (IT)
(74) Representative: Bergadano, Mirko

(56) References cited:
- EP-A1- 0 764 812
- EP-A1- 1 970 250
- DE-A1- 10 361 488
- JP-U- H0 459 011
- US-A- 4 733 335
- US-A1- 2005 068 781

## Description

The present invention relates to a motor-vehicle light.

More in detail, the present invention relates to a rear light for cars and the like, to which the following description will explicitly refer without loss of generality.

As known, rear lights of cars usually consist of rigid rear shell which is substantially tub-shaped, and is structured so as to be stably recessed within a dedicated space obtained in the rear part of the vehicle body; of one or more cup-shaped bodies having a substantially parabolic profile, each of which is positioned within the rear shell with the concavity facing the mouth of the shell, and has mirror-treated inner surface so as to reflect the incident light towards the mouth; of a series of incandescent light bulbs, each of which is located close to the bottom of a respective cup-shaped body; and of a front lenticular half-shell made of a transparent or semitransparent plastic material, optionally colored, which is arranged to close the mouth of the shell so as to emerge from the vehicle body and be crossed by the light emitted by the various underlying light bulbs.

More in detail, the front lenticular half-shell is usually provided with a series of transparent or semitransparent portions, of different color, each of which is arranged to close the mouth of a respective cup-shaped body so as to be crossed only by the light emitted by the incandescent light bulb positioned on the bottom of the same cup-shaped body.

In recent years, some manufacturers of rear lights for motor-vehicles have decided to replace incandescent light bulbs with arrays of light emitting diodes, traditionally referred to as LEDs. Light emitting diodes have a higher lighting efficiency and an average lifespan ten times higher than traditional incandescent light bulbs, with all the advantages that this implies.

Moreover, light emitting diodes are much smaller than incandescent light bulbs for automotive use, whereby the average light depth can be significantly reduced, thus allowing an easier positioning thereof in the back part of the vehicle. Shallow rear lights, in fact, allow the depth of the spaces to be made in the rear part of the vehicle body to be reduced, thus greatly simplifying the construction thereof.

Unfortunately, however, light emitting diodes are point-like high intensity light sources, whereby the short distance between the inner surface of the front lenticular half-shell and the light emitting diodes arranged on the bottom of the cup-shaped body very often causes a highly uneven distribution of the intensity of the light coming out of the single transparent or semitransparent portions of the front lenticular half-shell, with all the problems that this implies.

Some car manufacturers, in fact, believe that a highly uneven surface distribution of the intensity of the light coming out of the rear light of the vehicle is a synonym of poor product quality and can therefore negatively affect the perception the buyer/user has of the "overall quality" of the car, in turn closely associated with the "image" that the automotive company has on the market.

A motor-vehicle lamp according to the preamble of claim 1 is disclosed in EP 1 970 250 A1.

Aim of the present invention is to provide a rear light for cars which has a more even surface distribution of the intensity of the light coming out of the transparent or semitransparent portions of the front lenticular half-shell.

In compliance with the above aims, according to the present invention there is provided a motor-vehicle light as defined in claim 1 and preferably, though not necessarily, in any one of the dependent claims.

The present invention will now be described with reference to the accompanying drawings, which show a non-limiting example thereof, in which:
- figure 1 shows in exploded axonometric view, and with parts removed for clarity, a car rear light realized according to the teachings of the present invention;
- figure 2 shows in axonometric view a component of the figure 1 car rear light; whereas
- figure 3 shows a side view of the figure 2 component, sectioned along section line III-III.

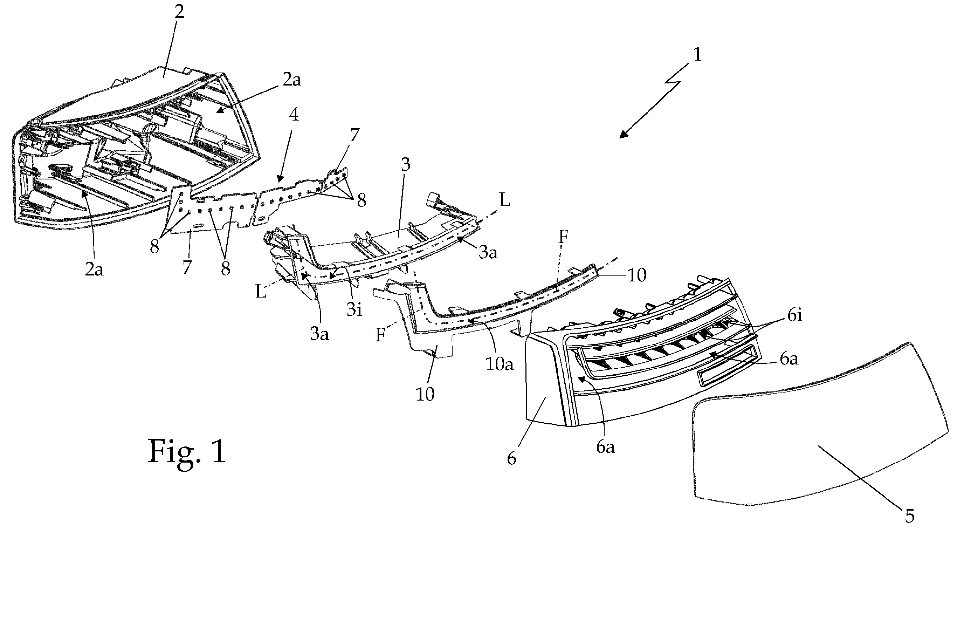

With reference to figure 1, reference number 1 indicates as a whole a motor-vehicle light which is particularly adapted to be incorporated into a car, motorcycle or the like.

More in detail, in the example shown, light 1 is preferably, though not necessarily, structured to be fixed onto the rear part of a car body and comprises:
- a rigid rear shell 2 which is substantially tub-shaped and is preferably, though not necessarily, structured so as to be recessed within a space especially obtained in the rear part of the car body, or in any case structured so as to be fixed onto the rear part of the car body;
- at least one focusing cup-shaped body 3 which is recessed within the rear shell 2 with the concavity facing the mouth 2a of the rear shell 2, i.e. with its mouth 3a facing mouth 2a of the rear shell 2, and has the inner surface 3i preferably, though not necessarily, structured so as to deviate/direct the incident light towards mouth 3a of the cup-shaped body 3, and therefore towards mouth 2a of the rear shell 2; and
- at least one LED light source 4 which is located close to the bottom of the cup-shaped body 3, and is structured so as to emit light when electricity powered.

Light 1 is further provided with a front lenticular half-shell 5 which is at least partially made of a transparent or semi-transparent material, and is arranged to close mouth 2a of the rear shell 2, and therefore also to cover mouth 3a of the cup-shaped body 3, so as to preferably, though not necessarily, emerge from the vehicle body (not shown) and be crossed by the light emitted by the light source 4.

More in detail, the lenticular half-shell 5 is provided with at least one transparent or semitransparent portion, optionally colored, and is arranged to close mouth 2a of the rear shell 2, so that such a transparent or semitransparent portion is positioned above mouth 3a of the cup-shaped body 3 and is thus crossed by the light emitted by the LED light source 4.

In particular, with reference to figure 1, in the example shown, the cup-shaped body 3 preferably, though not necessarily, consists of an oblong tub 3 which is preferably, though not necessarily, substantially L-shaped, and accommodates the light source 4 on the bottom thereof. The inner surface 3i of tub 3 is opaque and preferably, though not necessarily, made in a white or light grey color, so as to obtain a more even and homogeneous light distribution on mouth 3a of tub 3.

In the example shown, moreover, the cup-shaped body 3 is preferably, though not necessarily, recessed within an intermediate supporting cap 6 which is in turn structured to be fitted and firmly locked within the rear shell 2, right underneath the lenticular half-shell 5, and is preferably, though not necessarily, shaped so as to also accommodate other cup-shaped bodies of light 1 with corresponding electricity-powered light sources.

In other words, the intermediate supporting cap 6 is provided with a through opening 6a which substantially copies the shape of mouth 3a of the cup-shaped body 3, and the cup-shaped body 3 is inserted into the supporting cap 6 so that its substantially L-shaped mouth 3a is substantially positioned at the through opening 6a of the supporting cap 6.

In the example shown, in particular, the intermediate supporting cap 6 is preferably, though not necessarily, provided with a plurality of focusing recesses, each of which is able to accommodate an additional light source (not shown). The inner surface 6i of each focusing recess is preferably, though not necessarily, metallized or otherwise mirror-treated so as to reflect the incident light of the corresponding additional light source towards the lenticular half-shell 5 right on top.

In the example shown, finally, the oblong tub 3, the lenticular half-shell 5 and the supporting cap 6 are preferably, though not necessarily, entirely made from a plastic material through an injection molding process.

More in detail, the lenticular half-shell 5 is preferably, though not necessarily, entirely made of a transparent or semitransparent plastic material, optionally colored (such as for example polycarbonate or polymethyl-methacrylate); while the oblong tub 3, or the cup-shaped body 3, is preferably, though not necessarily, entirely made from an opaque white or light grey plastic material.

With reference to figure 1, on the other hand, the LED light source 4 consists of a support and supply board 7 which is structured to be fixed/located on the bottom of the cup-shaped body 3, and of a number of light emitting diodes 8, traditionally referred to as LEDs, which are fixed onto board 7 so as to project the light produced by them into the cup-shaped body 3, towards mouth 3a thereof.

In the example shown, in particular, the light emitting diodes 8 are preferably, though not necessarily, fixed onto the face of board 7 so as to be aligned and suitably distributed along a reference line that copies the shape of, and is aligned with and parallel to, the longitudinal middle line L of the oblong mouth 3a of the cup-shaped body 3.

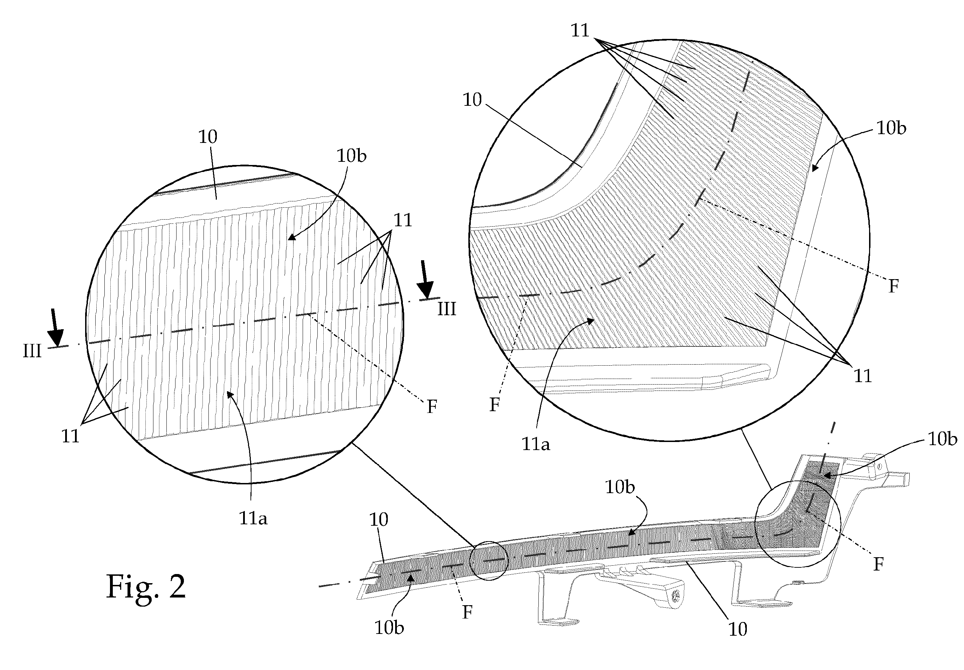

With reference to figures 1, 2 and 3, unlike the currently known automotive lights, light 1 is finally provided with an essentially sheet-shaped intermediate lenticular body 10 which is made of a transparent or semitransparent material and is arranged to close mouth 3a of the cup-shaped body 3, underneath the lenticular half-shell 5, so as to be crossed first by the light emitted by the light source 4.

The front face 10a of the intermediate lenticular body 10, i.e. the face directly facing the lenticular half-shell 5, is provided with plenty of recesses or blind holes preferably, though not necessarily, with a lenticular profile and diameter smaller than one tenth of millimeter, which are evenly distributed on the face surface so as to randomly and distributedly diffuse the light that crosses the intermediate lenticular body 10. Alternatively, the random and distributed diffusion of the light crossing the intermediate lenticular body 10 may also be obtained by subjecting the surface of the front face 10a of the intermediate lenticular body 10 to a surface abrasion (sandblasting), glazing or silk-screen printing process so as to locally increase the surface roughness of the piece.

The rear face 10b of the intermediate lenticular body 10, i.e. the face directly facing the cup-shaped body 3 and the diodes 8 of the light source 4, on the other hand, is provided with plenty of crests or rectilinear grooves 11 having a substantially cylindrical transversal profile, which are distributed on the surface of the lenticular body 10 so as to be parallel and adjacent to one another, preferably along the whole portion of the lenticular body 10 which covers mouth 3a of the cup-shaped body 3, so as to form a cylindrical-optics flat lens 11a which extends substantially without interruption, along the whole portion of the intermediate lenticular body 10 that is crossed by the light coming out of the mouth 3a of the cup-shaped body 3.

More in detail, in the example shown, the cylindrical-optics flat lens 11a is shaped so as to substantially copy that of mouth 3a of the cup-shaped body 3, and the generating lines of the single crests or rectilinear grooves 11 are oriented so as to be locally substantially orthogonal to the longitudinal middle line F of the cylindrical-optics flat lens 11a, which in turn copies the shape of the longitudinal middle line L of the oblong mouth 3a of the cup-shaped body 3, and is locally substantially coincident with (or however parallel and immediately adjacent to) the same longitudinal middle line L of the oblong mouth 3a of the cup-shaped body 3.

In other words, in the example shown, the cylindrical-optics flat lens 11a is substantially L-shaped, and the generating lines of the single crests or rectilinear grooves 11 are oriented so as to be locally substantially orthogonal to the longitudinal middle line F of the cylindrical-optics flat lens 11a, and is locally parallel to and aligned with the longitudinal middle line L of mouth 3a of the cup-shaped body 3.

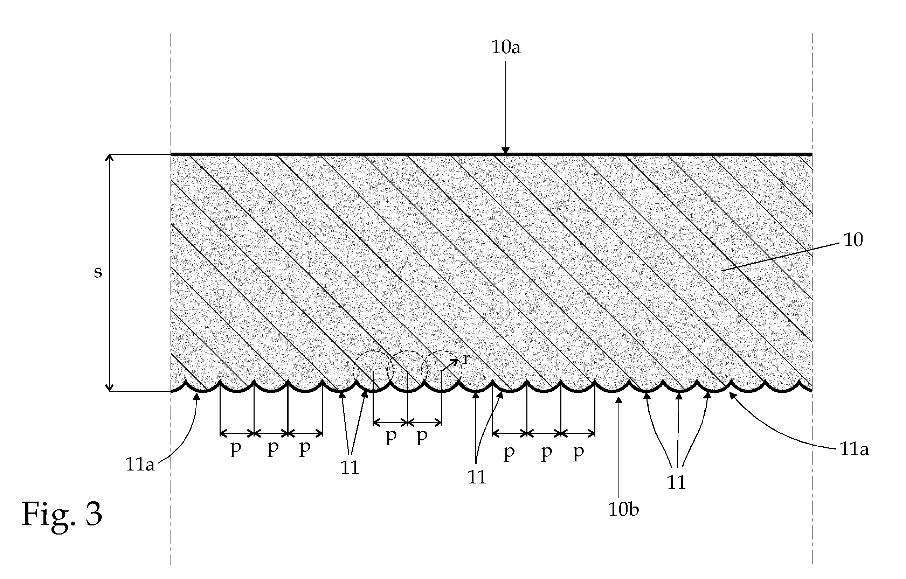

Moreover, with reference to figure 3, the pitch or centers-distance p between two adjacent crests or rectilinear grooves 11 ranges from 0.15 to 1.2 millimeters, while the curvature radius r of the cylindrical profile of each crest or rectilinear groove 11 is lower than double the value of the pitch or centers-distance p existing between the crests or rectilinear grooves 11.

Furthermore, in the example shown, the intermediate lenticular body 10 is shaped so as to have, in the zone of the cylindrical-optics flat lens 11a, a nominal thickness s preferably ranging from 1 to 5 millimeters.

Preferably, though not necessarily, the intermediate lenticular body 10 is finally entirely made of a transparent or semitransparent plastic material (such as for example polycarbonate or polymethyl-methacrylate), optionally colored, through an injection molding process.

The operation of the motor-vehicle light 1 is easily inferred from the above description, and requires no further explanations. But to note that the particular configuration of the cylindrical-optics flat lens 11a provided on the intermediate lenticular body 10 allows the light rays emitted by diodes 8 arranged on the bottom of the cup-shaped body 3 to be opened fan-wise, so that the distribution of the light coming out of the zone of the front lenticular half-shell 5 which is aligned with the cup-shaped body 3, is substantially even on the whole surface.

The advantages resulting from the presence of the intermediate lenticular body 10 are apparent. With a low price, a motor-vehicle rear light can be manufactured, where the light coming out of the single transparent or semitransparent portions of the front lenticular half-shell 5 light up, with a surface distribution of the light intensity being substantially constant and even on the whole area.

Finally, it is understood that changes and variations may be made to the motor-vehicle light 1 described and illustrated above without departing from the scope of the present invention.

For example, the intermediate lenticular body 10 may be directly made or attached onto the inner face of the front lenticular half-shell 5. In other words, the intermediate lenticular body 10 may be directly made onto the body of the front lenticular half-shell 5 during the piece molding process.

## Claims

1. Motor-vehicle light (1) comprising a rigid rear shell (2) and, within said rigid rear shell (2), at least one cup-shaped body (3) having its mouth (3a) faced to the mouth (2a) of the rigid rear shell (2), and at least one LED light source (4) which is located close to the bottom of said cup-shaped body (3) and is structured so to emit light when electricity powered; the motor-vehicle light (1) furthermore comprises an essentially sheet-shaped intermediate lenticular body (10) which is made of either transparent or semitransparent material, and is closing the mouth (3a) of the cup-shaped body (3) so to be crossed by the light emitted by the LED light source (4); the motor-vehicle light (1) being **characterized in that** the rear face (10b) of said intermediate lenticular body (10) being provided with a plenty of crests or rectilinear grooves (11) having a substantially cylindrical transversal profile, which are distributed on the surface of the lenticular body (10) one parallel and adjacent to the other, so as to form a cylindrical-optics flat lens (11a) that extends substantially without interruption, along the portion of the intermediate lenticular body (10) that is crossed by the light coming out from the mouth (3a) of the cup-shaped body (3); **in that** the pitch or centers-distance (p) between two adjacent crests or rectilinear grooves (11) on the rear face (10b) of the intermediate lenticular body (10) ranges between 0.15 and 1.2 millimeters; and **in that** the curvature radius (r) of the cylindrical profile of the rectilinear crests or grooves (11) is lower than double the value of the pitch or centers-distance (p) existing between the crests or rectilinear grooves (11).

2. Motor-vehicle light according to Claim 1, **characterized in that** the intermediate lenticular body (10) is shaped so as to have, in the zone of the cylindrical-optics flat lens (11a), a nominal thickness (s) ranging between 1 and 5 millimeters.

3. Motor-vehicle light according to any one of the preceding claims, **characterized in that** said cylindrical-optics flat lens (11a) extends substantially without interruption along the whole portion of the intermediate lenticular body (10) that is crossed by the light coming out from the mouth (3a) of the cup-shaped body (3).

4. Motor-vehicle light according to any one of the preceding claims, **characterized in that** the mouth (3a) of the cup-shaped body (3) is elongated in shape; **in that** the cylindrical-optics flat lens (11a) of the intermediate lenticular body (10) is shaped so as to substantially copy the shape of the mouth (3a) of the cup-shaped body (3); and **in that** the generating lines of the single crests or rectilinear grooves (11) are oriented so as to be locally substantially orthogonal to the longitudinal middle line (F) of the cylindrical-optics flat lens (11a).

5. Motor-vehicle light according to Claim 4, **characterized in that** the mouth (3a) of the cup-shaped body (3) is substantially L-shaped.

6. Motor-vehicle light according to any one of the preceding claims, **characterized in that** the surface of the front face (10a) of the intermediate lenticular body (10) is structured to randomly scatter the light coming out from the intermediate lenticular body (10) in a distributed manner.

7. Motor-vehicle light according to any one of the preceding claims, **characterized in that** the cup-shaped body (3) comprises a tub (3) that accommodates on the bottom the LED light source (4).

8. Motor-vehicle light according to Claim 7, **characterized in that** the inner surface (31) of the tub (3) is opaque and is either white or light grey colored.

9. Motor-vehicle light according to any one of the preceding claims, **characterized by** further comprising a front lenticular half-shell (5) that is at least partially made of transparent or semitransparent material, and is arranged to close the mouth (2a) of the rear shell (2), over the mouth (3a) of the cup-shaped body (3) and over the corresponding intermediate lenticular body (10).

10. Motor-vehicle light according to any one of the preceding claims, **characterized in that** the LED light source (4) comprises a support and supply board (7) which is structured for being located on the bottom of the cup-shaped body (3), and a number of light emitting diodes (8) that are fixed onto the board (7) so as to project the light produced by them into the cup-shaped body (3), towards the mouth (3a) of the cup-shaped body.

## Patentansprüche

1. Kraftfahrzeugleuchte (1) mit einem starren hinteren Gehäuse (2) und, innerhalb des starren hinteren Gehäuses (2), mindestens einem napfförmigen Körper (3), dessen Mündung (3a) der Mündung (2a) des starren hinteren Gehäuses (2) zugewandt ist, und mindestens einer LED-Lichtquelle (4), die sich nahe der Unterseite des napfförmigen Körpers (3) befindet und so strukturiert ist, dass sie Licht aussendet, wenn ihr elektrische Energie zugeführt wird; die Kraftfahrzeugleuchte (1) weist ferner einen im Wesentlichen blattförmigen, linsenförmigen Zwischenkörper (10) auf, der entweder aus transparentem oder halbtransparentem Material hergestellt ist und die Mündung (3a) des napfförmigen Körpers (3) so schließt, dass er von dem von der LED-Lichtquelle (4) ausgesendeten Licht durchquert wird; wobei die Kraftfahrzeugleuchte (1) **dadurch gekennzeichnet ist, dass** die hintere Fläche (10b) des linsenförmigen Zwischenkörpers (10) mit einer großen Zahl von Graten oder geradlinigen Rillen (11) mit einem im Wesentlichen zylindrischen Querprofil, die auf der Oberfläche des linsenförmigen Körpers (10) zueinander parallel oder aneinander angrenzend verteilt sind, versehen ist, um eine zylinderoptische flache Linse (11a) zu bilden, die sich im Wesentlichen ohne Unterbrechung entlang dem Abschnitt des linsenförmigen Zwischenkörpers (10), der von dem aus der Mündung (3a) des napfförmigen Körpers (3) kommenden Licht durchquert wird, erstreckt; dadurch, dass der Abstand oder die Mittendistanz (p) zwischen zwei aneinander angrenzenden Graten oder geradlinigen Rillen (11) auf der hinteren Fläche (10b) des linsenförmigen Zwischenkörpers (10) im Bereich zwischen 0,15 und 1,2 Millimetern liegt; und dadurch, **dass** der Krümmungsradius (r) des zylindrischen Profils der geradlinigen Grate oder Rillen (11) kleiner als das Zweifache des Abstands oder der Mittendistanz (p) zwischen den Graten oder geradlinigen Rillen (11) ist.

2. Kraftfahrzeugleuchte nach Anspruch 1, **dadurch gekennzeichnet, dass** der linsenförmige Zwischenkörper (10) so geformt ist, dass er in der Zone der zylinderoptischen flachen Linse (11a) eine Nennstärke (s) im Bereich zwischen 1 und 5 Millimetern hat.

3. Kraftfahrzeugleuchte nach einem der vorangegangenen Ansprüche, **dadurch gekennzeichnet, dass** die zylinderoptische flache Linse (11a) sich im Wesentlichen ohne Unterbrechung entlang dem gesamten Abschnitt des linsenförmigen Zwischenkörpers (10), der von dem aus der Mündung (3a) des napfförmigen Körpers (3) kommenden Licht durchquert wird, erstreckt.

4. Kraftfahrzeugleuchte nach einem der vorangegangenen Ansprüche, **dadurch gekennzeichnet, dass** die Mündung (3a) des napfförmigen Körpers (3) in ihrer Form verlängert ist; dadurch, dass die zylinderoptische flache Linse (11a) des linsenförmigen Zwischenkörpers (10) so geformt ist, dass sie im Wesentlichen die Form der Mündung (3a) des napfförmigen Körpers (3) übernimmt; und dadurch, dass die generierenden Linien der einzelnen Grate oder geradlinigen Rillen (11) so ausgerichtet sind, dass sie örtlich im Wesentlichen rechtwinklig zur längs verlaufenden Mittellinie (F) der zylinderoptischen flachen Linse (11a) sind.

5. Kraftfahrzeugleuchte nach Anspruch 4, **dadurch gekennzeichnet, dass** die Mündung (3a) des napfförmigen Körpers (3) im Wesentlichen L-förmig ist.

6. Kraftfahrzeugleuchte nach einem der vorangegangenen Ansprüche, **dadurch gekennzeichnet, dass** die Oberfläche der vorderen Fläche (10a) des linsenförmigen Zwischenkörpers (10) so strukturiert ist, dass sie das aus dem linsenförmigen Zwischenkörper (10) kommende Licht zufällig verteilend streut.

7. Kraftfahrzeugleuchte nach einem der vorangegangenen Ansprüche, **dadurch gekennzeichnet, dass** der napfförmige Körper (3) eine Wanne (3) aufweist, die an ihrer Unterseite die LED-Lichtquelle (4) aufnimmt.

8. Kraftfahrzeugleuchte nach Anspruch 7, **dadurch gekennzeichnet, dass** die innere Oberfläche (3i) der Wanne (3) lichtundurchlässig ist und entweder von weißer oder hellgrauer Farbe ist.

9. Kraftfahrzeugleuchte nach einem der vorangegangenen Ansprüche, **dadurch gekennzeichnet, dass** sie ferner ein vorderes linsenförmiges Halbgehäuse (5) aufweist, das mindestens teilweise aus transparentem oder halbtransparentem Material hergestellt ist und angeordnet ist, um die Mündung (2a) des hinteren Gehäuses (2) über der Mündung (3a) des napfförmigen Körpers (3) und über dem entsprechenden linsenförmigen Zwischenkörper (10) zu schließen.

10. Kraftfahrzeugleuchte nach einem der vorangegangenen Ansprüche, **dadurch gekennzeichnet, dass** die LED-Lichtquelle (4) eine Stütz- und Versorgungsplatte (7), die für die Anordnung an der Unterseite des napfförmigen Körpers (3) strukturiert ist, und eine Anzahl von Leuchtdioden (8), die so an der Platte (7) befestigt sind, dass sie das von ihnen erzeugte Licht in den napfförmigen Körper (3) in Richtung der Mündung (3a) des napfförmigen Körpers werfen, aufweist.

## Revendications

1. Feu de véhicule automobile (1) comprenant une coque arrière rigide (2) et, dans ladite coque arrière rigide (2), au moins un corps cupuliforme (3) et dont l'orifice (3a) en regard de l'orifice (2a) de la coque arrière rigide (2), et au moins une source de lumière DEL (4) qui est située près du fond dudit corps cupuliforme (3) et est structurée de façon à émettre de la lumière lorsqu'elle est alimentée par de l'électricité ; le feu de véhicule automobile (1) comprenant en outre un corps lenticulaire intermédiaire essentiellement en forme de feuille (10) qui est réalisé en matériau soit transparent soit semi-transparent, et ferme l'orifice (3a) du corps cupuliforme (3) de façon à être traversé par la lumière émise par la source de lumière DEL (4) ; le feu de véhicule automobile (1) étant **caractérisé en ce que** la face arrière (10b) dudit corps lenticulaire intermédiaire (10) est pourvue de nombreuses crêtes ou gorges rectilignes (11) ayant un profil transversal sensiblement cylindrique, qui sont distribuées sur la surface du corps lenticulaire (10) parallèles et adjacentes les unes aux autres, de façon à former une lentille plate d'optique cylindrique (11a) qui s'étend sensiblement sans interruption, le long de la portion du corps lenticulaire intermédiaire (10) qui est traversé par la lumière sortant de l'orifice (3a) du corps cupuliforme (3) ; le pas ou entraxe (p) entre deux crêtes ou gorges rectilignes (11) adjacentes sur la face arrière (10b) du corps lenticulaire intermédiaire (10) allant de 0,15 à 1,2 millimètre ; et le rayon de courbure (r) du profil cylindrique des crêtes ou gorges rectilignes (11) étant inférieur au double de la valeur du pas ou entraxe (p) existant entre les crêtes ou gorges rectilignes (11).

2. Feu de véhicule automobile selon la revendication 1, **caractérisé en ce que** le corps lenticulaire intermédiaire (10) est formé de façon à présenter, dans la zone de la lentille plate d'optique cylindrique (11a), une épaisseur nominale (s) allant de 1 à 5 millimètres.

3. Feu de véhicule automobile selon l'une quelconque des revendications précédentes, **caractérisé en ce que** ladite lentille plate d'optique cylindrique (11a) s'étend sensiblement sans interruption le long de la totalité de la portion du corps lenticulaire intermédiaire (10) qui est traversé par la lumière sortant de l'orifice (3a) du corps cupuliforme (3).

4. Feu de véhicule automobile selon l'une quelconque des revendications précédentes, **caractérisé en ce que** l'orifice (3a) du corps cupuliforme (3) est de forme allongée ; **en ce que** la lentille plate d'optique cylindrique (11a) du corps lenticulaire intermédiaire (10) est formée de façon à reproduire sensiblement la forme de l'orifice (3a) du corps cupuliforme (3) ; et **en ce que** les lignes génératrices des crêtes ou gorges rectilignes (11) uniques sont orientées de façon à être sensiblement orthogonales localement à la ligne milieu longitudinale (F) de la lentille plate d'optique cylindrique (11a).

5. Feu de véhicule automobile selon la revendication 4, **caractérisé en ce que** l'orifice (3a) du corps cupuliforme (3) est sensiblement en forme de L.

6. Feu de véhicule automobile selon l'une quelconque des revendications précédentes, **caractérisé en ce que** la surface de la face avant (10a) du corps lenticulaire intermédiaire (10) est structurée pour disperser aléatoirement la lumière sortant du corps lenticulaire intermédiaire (10) de façon distribuée.

7. Feu de véhicule automobile selon l'une quelconque des revendications précédentes, **caractérisé en ce que** le corps cupuliforme (3) comprend une cuve (3) qui reçoit sur le fond la source de lumière DEL (4).

8. Feu de véhicule automobile selon la revendication 7, **caractérisé en ce que** la surface interne (3i) de la cuve (3) est opaque et est de couleur blanche ou gris clair.

9. Feu de véhicule automobile selon l'une quelconque des revendications précédentes, **caractérisé en ce qu'**il comprend en outre une demi-coque lenticulaire avant (5) qui est au moins partiellement réalisée en matériau transparent ou semi-transparent, et est agencée pour fermer l'orifice (2a) de la coque arrière (2), par-dessus l'orifice (3a) du corps cupuliforme (3) et par-dessus le corps lenticulaire intermédiaire (10) correspondant.

10. Feu de véhicule automobile selon l'une quelconque des revendications précédentes, caractérisé en ce la source de lumière DEL (4) comprend une carte de support et d'alimentation (7) qui est structurée pour être située sur le fond du corps cupuliforme (3), et un nombre de diodes électroluminescentes (8) qui sont fixées sur la carte (7) de façon à projeter la lumière produite par celles-ci dans le corps cupuliforme (3), vers l'orifice (3a) du corps cupuliforme.
